# EUROPÄISCHE PATENTSCHRIFT

(11) **EP 1 235 640 B1**
(45) Veröffentlichungstag und Bekanntmachung des Hinweises auf die Patenterteilung: **12.05.2004**
(21) Anmeldenummer: 00981266.0
(22) Anmeldetag: 17.11.2000
(51) Int. Cl.: B01J 2/06, F25C 1/00

(54) **VERFAHREN UND VORRICHTUNG ZUM PELLETIEREN EINER FLÜSSIGEN ODER PASTÖSEN MASSE**
METHOD AND DEVICE FOR PELLETING A LIQUID OR PASTE-LIKE MASS
PROCEDE ET DISPOSITIF DE GRANULATION D'UNE MATIERE LIQUIDE OU PATEUSE

(30) Priorität: 23.11.1999 DE 19956168
(43) Veröffentlichungstag der Anmeldung: 04.09.2002
(73) Patentinhaber: Messer Griesheim GmbH, 65933 Frankfurt am Main (DE)
(72) Erfinder: MOSER, Friedrich, 47167 Duisburg (DE); HOFFMANNS, Wolfgang, 47877 Willich (DE); KOSOCK, Stefan, 47805 Krefeld (DE)
(86) Internationale Anmeldenummer: PCT/EP2000/011455
(87) Internationale Veröffentlichungsnummer: WO 2001/037981

(56) Entgegenhaltungen:
- EP-A- 0 919 279
- DE-A- 2 550 117
- US-A- 3 228 838

## Beschreibung

Die Erfindung betrifft ein Verfahren zum Pelletieren einer flüssigen oder pastösen Masse, indem ein mittels eines Leitkörpers geführter Kühlstrom eines flüssigen Kühlmittels erzeugt, die Masse in den Kühlstrom eingebracht und darin unter Bildung von Pellets teilweise ausgefroren wird, und die Pellets anschließend vom Leitkörper entfernt und vollständig ausgefroren werden.

Weiterhin betrifft die Erfindung eine Vorrichtung zum Pelletieren einer flüssigen oder pastösen Masse, mit einer Strömungserzeugungseinrichtung zur Erzeugung eines Kühlstromes aus flüssigem Kühlmittel, mit einem eine Übergabestelle aufweisenden Leitkörper zur Führung und Übergabe des Kühlstromes, und mit einer Eintragvorrichtung zum Einbringen der Masse in den Kühlstrom.

Verfahren und Vorrichtung der eingangs genannten Gattung sind aus der DE-A 198 37 600 bekannt. Darin wird vorgeschlagen, eine pastöse Masse über eine Tropfeinrichtung in eine nach oben offene, geneigte Fließrinne, in der ein laminarer Strom aus flüssigem Stickstoff fließt, einzutropfen. In der Fließrinne werden die Tropfen im Stickstoffstrom unter Bildung von Pellets angefroren und anschließend an einer Übergabestelle einem von einer Wärmeisolierung umgebenden, gelochten oder gitterförmigen Förderband zugeführt. Durch die Öffnungen des Förderbandes fließt der flüssige Stickstoff in einen Sammelbehälter ab, von wo er mittels einer Pumpe wieder auf die Fließrinne gepumpt wird. Die teilweise ausgefrorenen Pellets werden mittels des Förderbandes einem Gaskanal zugeführt und darin durch die Abluft des flüssigen Stickstoffes vollständig ausgefroren und gelangen anschließend zu einem Sammelbehälter.

Die Pellets werden in einem Strom aus flüssigem Stickstoff angefroren, so daß sie eine gewisse Mindestfestigkeit aufweisen, bevor sie auf das Förderband gelangen. Die sich einstellende Festigkeit hängt unter anderem von der Verweilzeit der Pellets auf der Fließrinne, und somit von deren Länge ab. Um auch bei sich ändernden Wärmekapazitäten und Volumina der zu gefrierenden Massen ausreichende Verweilzeiten der Pellets auf der Fließrinne gewährleisten zu können, ist deren Länge großzügig zu bemessen, so daß die bekannte Vorrichtung eine relativ große Baulänge aufweist. Ansonsten besteht die Gefahr, daß noch nicht ausreichend angefrorene Pellets durch Kontakt mit dem Förderband deformiert werden.

Der Erfindung liegt die Aufgabe zugrunde, ein einfaches und kostensparendes Verfahren für die reproduzierbare Herstellung von Pellets anzugeben, bei dem die Gefahr einer Deformierung vermindert ist, und eine einfache und kompakte Vorrichtung für die Durchführung des Verfahrens bereitzustellen.

Hinsichtlich des Verfahrens wird diese Aufgabe ausgehend von dem eingangs genannten Verfahren erfindungsgemäß dadurch gelöst, daß die Pellets in ein Kühlmittelbad mit flüssigem Kühlmittel eingebracht und darin vollständig ausgefroren werden.

Die noch nicht vollständig durchgefrorenen Pellets gelangen vom Leitkörper - beispielsweise einer Wanne, einer Pelletierrinne oder einer Rohrleitung - in ein Kühlmittelbad mit einem flüssigen Kühlmittel. Im Kühlmittelbad werden die Pellets weiter ausgefroren. Mechanische Kontakte zwischen den gefrierenden Pellets und einer Wandung zu einem Zeitpunkt zu dem die Pellets noch keine ausreichende Oberflächenhärte und Festigkeit aufweisen, werden so vermieden. Dadurch werden unerwünschte und nicht reproduzierbare Veränderungen der Pellet-Oberfläche ausgeschlossen. Die Gefahr von Deformationen der angefrorenen Pellets im Kühlmittelbad ist daher - im Vergleich zum bekannten Verfahren, bei dem die erst angefrorenen Pellets auf ein Förderband aufgebracht werden - gering. Das erfindungsgemäße Verfahren erlaubt daher eine gewisse Freiheit bei der Einstellung des Ausfrierungsgrades der Pellets vor dem Einbringen in das Kühlmittelbad und erleichtert die Reproduzierbarkeit der Pelletier-Ergebnisses, was insbesondere bei möglichen Masseund Dichteschwankungen der Pellets hilfreich ist. Darüberhinaus ermöglicht das Verfahren den Einsatz kürzerer Leitkörper und damit eine - im Vergleich zur bekannten Vorrichtung - kompaktere Bauweise.

Besonders einfach gestaltet sich das Verfahren, wenn der die Pellets enthaltende Kühlstrom in das Kühlmittelbad abfließt. In diesem Fall mündet der den Kühlstrom führende Leitkörper in das Kühlmittelbad, wodurch der Kühlstrom dem Kühlmittelbad zurückgeführt wird.

Als besonders günstig hat sich eine Verfahrensweise erwiesen, bei der die Pellets auf eine im Kühlmittelbad verlaufende Fördereinrichtung aufgebracht und mittels der Fördereinrichtung im Kühlmittelbad transportiert und aus dem Kühlmittelbad ausgetragen werden. Währenddessen die Pellets im Kühlmittelbad transportiert werden, werden sie weiter ausgefroren und anschließend mittels der Fördereinrichtung aus dem Kühlmittelbad ausgetragen. Infolge des Auftriebes im flüssigen Kühlmittel ist der mechanische Kontakt der Pellets mit der Fördereinrichtung nicht oder wenig schädlich in bezug auf Deformationen der Pellet-Oberfläche.

Mittels des erfindungsgemäßen Verfahrens können beispielsweise Soßen, Dessertprodukte oder Eiscreme pelletiert werden. Vorzugsweise wird als zu pelletierende Masse jedoch Fruchtsaft eingesetzt.

Hinsichtlich der Vorrichtung zum Pelletieren einer flüssigen oder pastösen Masse wird die oben angegebene Aufgabe ausgehend von der eingangs genannten Vorrichtung erfindungsgemäß dadurch gelöst, daß in einem Behälter ein Kühlmittelbad vorgesehen ist, und daß die Übergabestelle des Leitkörpers in dem Kühlmittelbad oder oberhalb davon angeordnet ist.

Vom Leitkörper gelangen die noch nicht vollständig durchgefrorenen Pellets mit dem Kühlmittelstrom in ein Kühlmittelbad. Hierzu ist die Übergabestelle des Leitkörpers in einer ersten Ausführungsform der erfindungsgemäßen Vorrichtung oberhalb des Kühlmittelbades angeordnet, und in einer zweiten Ausführungsform im Kühlmittelbad. Unter dem "Leitkörper" wird hier beispielsweise einer Wanne, einer Pelletierrinne oder einer Rohrleitung und unter dem "Kühlmittelbad" - ein in einem Behälter aufgenommenes Bad aus einem flüssigen Kühlmittel verstanden. Im Kühlmittelbad werden die Pellets weiter ausgefroren. Mechanische Kontakte zwischen den gefrierenden Pellets und einer Wandung zu einem Zeitpunkt zu dem die Pellets noch keine ausreichende Oberflächenhärte und Festigkeit aufweisen, werden so vermieden. Dadurch werden unerwünschte und nicht reproduzierbare Veränderungen der Pellet-Oberfläche ausgeschlossen. Die Gefahr von Deformationen der angefrorenen Pellets im Kühlmittelbad ist daher - im Vergleich zum bekannten Verfahren, bei dem die nur angefrorenen Pellets auf ein Förderband aufgebracht werden - gering. Der Leitkörper kann daher kürzer ausgebildet sein und erlaubt so eine - im Vergleich zur bekannten Vorrichtung - kompaktere Bauweise.

Eine weitere Verbesserung ergibt sich bei einer Ausführungsform der erfindungsgemäßen Vorrichtung bei der der Leitkörper vollständig innerhalb des Behälters angeordnet ist und oberhalb des Kühlmittelbades mündet. Dabei weist der Leitkörper oberhalb des Kühlmittelbades eine Öffnung auf, durch die teilweise angefrorene Pellets in das Kühlmittelbad gelangen oder der Leitkörper endet oberhalb des Kühlmittelbades. In einer besonders platzsparenden Ausführungsform erstreckt sich der Leitkörper mit seiner gesamten Länge oberhalb des Kühlmittelbades.

Im Hinblick auf eine besonders kompakte Bauweise wird die Länge des Leitkörpers vorzugsweise im Bereich von 30 cm bis 60 cm gewählt.

Besonders einfach gestaltet sich die erfindungsgemäße Vorrichtung, wenn als Behälter ein Tauchbadfroster eingesetzt wird, wobei eine Fördereinrichtung zum Austrag von Pellets aus dem Tauchbadfroster vorgesehen ist, und wobei die Übergabestelle des Leitkörpers oberhalb der Fördereinrichtung mündet. Geeignete Tauchbadfroster sind im Handel erhältlich. Dadurch, daß die Übergabestelle des Leitkörpers oberhalb der Fördereinrichtung mündet, gelangen die Pellets ohne weiteren Kontakt mit anderen Begrenzungswandungen der Vorrichtung zu der Fördereinrichtung.

Die erfindungsgemäße Vorrichtung ist für die Pelletierung von Soßen, Dessertprodukte oder Eiscreme geeignet.. In einer bevorzugten Ausführungsform weist sie jedoch eine Eintragvorrichtung auf, die zum Eintragen eine Fruchtsaft-Masse in den Kühlstrom ausgebildet ist.

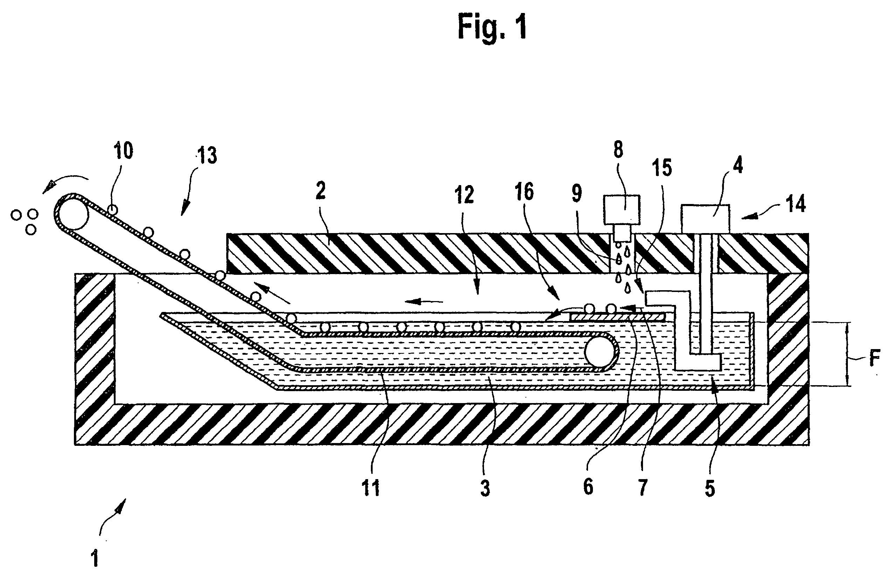

Nachfolgend wird die Erfindung anhand eines Ausführungsbeispiels und einer Zeichnung näher erläutert. In schematischer Darstellung zeigt
- **Figur 1**: in einer Seitenansicht eine Ausführungsform der erfindungsgemäßen Vorrichtung unter Einsatz eines Tauchbadfrosters zur Herstellung von Fruchtsaftkügelchen.

Bei der Vorrichtung gemäß **Figur 1** ist einem handelsüblichen Tauchbadfroster insgesamt die Bezugsziffer 1 zugeordnet. Der Tauchbadfroster 1 weist ein wärmeisolierendes Gehäuse 2 auf, das ein Kühlmittelbad 3 aus Flüssigstickstoff umgibt. Der Füllstand (Distanzpfeil "F") des Kühlmittelbades 3 wird mittels einer (in der Figur nicht dargestellten) Füllstandsmessung kontrolliert und geregelt. Oberhalb des Kühlmittelbades 3 erstreckt sich eine zur Horizontalen leicht geneigte Pelletierrinne 6, die im Ausführungsbeispiel eine Länge von 30 cm aufweist. Mittels einer Flüssigpumpe, der insgesamt die Bezugsziffer 14 zugeordnet ist, wird kontinuierlich ein Kühlstrom (als Richtungspfeil 7 gekennzeichnet) aus Flüssigstickstoff auf die Pelletierrinne 6 geleitet. Die Flüssigpumpe 14 besteht aus einer Antriebseinheit 4 mit Motor und Welle und einem Gehäuse, das eine im Kühlmittelbad 3 angeordnete Kühlmittelansaugöffnung 5 und einen oberhalb der Pelletierrinne 6 endenden Kühlmittelaustritt 15 aufweist. Oberhalb der Pelletierrinne 6 ist eine Eintropfvorrichtung 8 vorgesehen, mittels der flüssige oder pastöse Fruchtsaft-Masse 9 in den Kühlstrom 7 eingetropft wird. Im Kühlstrom 7 gefriert die tropfenförmige Fruchtsaft-Masse 9 unter Bildung von Fruchtsaftkügelchen 10, die vom Kühlstrom 7 mitgenommen werden. Der Kühlstrom 7 fließt an der Übergabestelle 16 der Pelletierrinne 6 mitsamt der teilweise gefrorenen Fruchtsaftkügelchen 10 wieder in das Kühlmittelbad 3 des Tauchfrosters 1 ab. Dort werden die Fruchtsaftkügelchen 10 von einem Transportband 11 aufgenommen und aus dem Kühlmittelbad 3 herausgetragen. Hierzu verläuft das Transportband 11 auf einer ersten Teilstrecke 12 innerhalb des Kühlmittelbades 3 und wird auf einer zweiten Teilstrecke 13 aus dem Kühlmittelbad 3 schräg nach oben aus dem Gehäuse 2 abgezogen. Dort werden die Fruchtsaftkügelchen 10 in einen (in der Figur nicht dargestellten) Sammelbehälter befördert.

Nachfolgend wird das erfindungsgemäße Verfahren anhand eines Ausführungsbeispiels und anhand der Darstellung der Vorrichtung in Figur 1 näher erläutert.

Das Kühlmittelbad 3 aus kälteverflüssigtem Stickstoff (LN₂) hat eine Temperatur von - 196 °C. Mittels der Flüssigpumpe 14 wird auf der Pelletierrinne 6 der Kühlstrom 7 erzeugt. Die mittlere Strömungsgeschwindigkeit des Kühlstromes 7 auf dieser Strecke liegt um 0,5 m/s. Die Fruchtsaft-Masse 9 wird in den Kühlstrom 7 eingetropft und mit diesem zum gegenüberliegenden Ende der Pelletierrinne 6 geleitet. Unter Berücksichtigung der Länge der Pelletierrinne 6 ergibt sich daraus eine mittlere Verweilzeit der eingetropften Fruchtsaftkügelchen 10 im flüssigen Kühlstrom 7 von ca. 0,6 Sekunden. Diese Behandlung führt zu einem oberflächlichen Anfrieren der Fruchtsaftkügelchen 10, deren Masse bei einem Durchmesser ca. 6 mm jeweils etwa 0,1g beträgt.

Mit dem Kühlstrom 7 gelangen die Fruchtsaftkügelchen 10 in das Kühlmittelbad 3 des Tauchbadfrosters 1, wo sie unter der Einwirkung des kaltverflüssigten Stickstoffes vollständig ausfrieren. Dabei werden die Fruchtsaftkügelchen 10 mittels des Transportbandes 11 über eine Strecke entsprechend der Länge der ersten Teilstrecke 12 des Transportbandes 11 durch das Kühlmittelbad 3 gefördert. Die Länge der ersten Teilstrecke und die Geschwindigkeit des Transportbandes 11 sind dabei so gewählt, daß die Verweilzeit der Fruchtsaftkügelchen 10 darauf etwa 10 Sekunden beträgt, so daß sie beim Austritt des Transportbandes 11 aus dem Kühlmittelbad 3 vollständig ausgefroren sind.

Dadurch, daß das Ausfrieren in einer Flüssigkeit erfolgt, werden mechanische Beschädigungen der Fruchtsaftkügelchen 10 weitgehend vermieden. Aufgrund des Auftriebes der Fruchtsaftkügelchen 10 in der Flüssigkeit des Kühlmittelbades 3 machen sich mögliche Berührungen mit dem Transportband 11 nicht oder nur unwesentlich bemerkbar. Wegen ihrer kurzen Länge findet die Pelletierrinne 6 ohne aufwendigen Umbau vollständig in einem üblichen Tauchbadfroster Platz, indem sie oberhalb des Kühlmittelbades 3 des Tauchbadfrosters angeordnet wird.

## Patentansprüche

1. Verfahren zum Pelletieren einer flüssigen oder pastösen Masse, indem ein mittels eines Leitkörpers geführter Kühlstrom eines flüssigen Kühlmittels erzeugt, die Masse in den Kühlstrom eingebracht und darin unter Bildung von Pellets teilweise ausgefroren wird, und die Pellets anschließend vom Leitkörper entfernt und vollständig ausgefroren werden, **dadurch gekennzeichnet, daß** die Pellets (10) in ein Kühlmittelbad (3) mit flüssigem Kühlmittel eingebracht und darin vollständig ausgefroren werden, wobei die Pellets (10) auf eine im Kühlmittelbad (3) verlaufende Fördereinrichtung (11) aufgebracht und mittels der Fördereinrichtung (11) im Kühlmittelbad (3) transportiert und aus dem Kühlmittelbad (3) ausgetragen werden.

2. Verfahren nach Anspruch 1, **dadurch gekennzeichnet, daß** der die Pellets (3) enthaltende Kühlstrom (7) in das Kühlmittelbad (3) abfließt.

3. Verfahren nach Anspruch 1 oder 2, **dadurch gekennzeichnet, daß** als zu pelletierende Masse eine Fruchtsaft-Masse (9) eingesetzt wird.

4. Vorrichtung zum Pelletieren einer flüssigen oder pastösen Masse, mit einer Strömungserzeugungseinrichtung zur Erzeugung eines Kühlstromes aus flüssigem Kühlmittel, mit einem eine Übergabestelle aufweisenden Leitkörper zur Führung und Übergabe des Kühlstromes, und mit einer Eintragvorrichtung zum Einbringen der Masse in den Kühlstrom, **dadurch gekennzeichnet, daß** in einem Behälter (1) ein Kühlmittelbad (3) vorgesehen ist, und die Übergabestelle (16) des Leitkörpers (6) in dem Kühlmittelbad (3) oder oberhalb davon angeordnet ist, wobei der Behälter (1) als Tauchbadfroster ausgebildet und eine Fördereinrichtung (11) zum Transport von Pellets (10) in dem Kühlmittelbad (3) und zum Austrag von Pellets (10) aus dem Tauchbadfroster vorgesehen ist und die Übergabestelle (16) des Leitkörpers (6) oberhalb der Fördereinrichtung (11) mündet und der Leitkörpers (6) innerhalb des Behälters (1) angeordnet ist.

5. Vorrichtung nach Anspruch 4, **dadurch gekennzeichnet, daß** der Leitkörper (6) sich mit seiner gesamten Länge oberhalb des Kühlmittelbades (3) erstreckt.

6. Vorrichtung nach Anspruch 4 oder 5, **dadurch gekennzeichnet, daß** der Leitkörper (6) eine Länge im Bereich von 30 cm bis 60 cm aufweist.

7. Vorrichtung nach einem der Ansprüche 5 bis 7 gekennzeichnet, daß die Eintragvorrichtung (8) zum Einbringen einer Fruchtsaft-Masse (9) in den Kühlstrom (7) ausgebildet ist.

## Claims

1. Method for pelletizing a liquid or pasty mass, in that a cooling stream of a liquid coolant, the said cooling stream being guided by means of a guide body, is generated, the mass is introduced into the cooling stream and is partially frozen out therein so as to form pellets, and the pellets are subsequently removed from the guide body and frozen out completely, **characterized in that** the pellets (10) are introduced into a coolant bath (3) having liquid coolant and are frozen out completely therein, the pellets (10) being applied to a conveying device (11) running in the coolant bath (3) and, by means of the conveying device (11), being transported in the coolant bath (3) and discharged out of the coolant bath (3).

2. Method according to Claim 1, **characterized in that** the cooling stream (7) containing the pellets (3) flows out into the coolant bath (3).

3. Method according to Claim 1 or 2, **characterized in that** a fruit juice mass (9) is used as the mass to be pelletized.

4. Apparatus for pelletizing a liquid or pasty mass, with a flow-generating device for generating a cooling stream of liquid coolant, with a guide body, having a transfer point, for the guidance and transfer of the cooling stream, and with an infeed device for introducing the mass into the cooling stream, **characterized in that** a coolant bath (3) is provided in a container (1), and the transfer point (16) of the guide body (6) is arranged in the coolant bath (3) or above the latter, the container (1) being designed as an immersion froster, a conveying device (11) for the transport of pellets (10) in the coolant bath (3) and for the discharge of pellets (10) out of the immersion froster being provided, the transfer point (16) of the guide body (6) issuing above the conveying device (11), and the guide body (6) being arranged within the container (1).

5. Apparatus according to Claim 4, **characterized in that** the guide body (6) extends with its entire length above the coolant bath (3).

6. Apparatus according to Claim 4 or 5, **characterized in that** the guide body (6) has a length in the range of 30 cm to 60 cm.

7. Apparatus according to one of Claims 5 to 7, **characterized in that** the infeed device (8) is designed for introducing a fruit juice mass (9) into the cooling stream (7).

## Revendications

1. Procédé pour transformer en boulettes une masse liquide ou pâteuse selon lequel on crée un flux de refroidissement d'un agent de refroidissement liquide en le guidant à l'aide d'un organe de guidage, on introduit la masse dans le flux de refroidissement et on le congèle partiellement en formant des boulettes puis on enlève les boulettes de l'organe de guidage et on les congèle complètement,
**caractérisé en ce qu'**
on introduit les boulettes (10) dans un bain d'agent de refroidissement (3) contenant un agent de refroidissement liquide et on les congèle complètement,
on fait passer les boulettes (10) sur une installation de transport (11) passant dans le bain d'agent de refroidissement (3), et à l'aide de l'installation de transport (11) on les transporte dans le bain de refroidissement (3) puis on les extrait du bain de refroidissement (3).

2. Procédé selon la revendication 1,
**caractérisé en ce que**
le flux de refroidissement (11) contenant les boulettes (10) s'évacue dans le bain d'agent de refroidissement

3. Procédé selon la revendication 1 ou 2,
**caractérisé en ce que**
comme masse à transformer en boulettes on utilise une masse de jus de fruit (9).

4. Dispositif pour transformer en boulettes une masse liquide ou pâteuse comportant une installation créant un flux pour générer un flux de refroidissement formé d'un agent de refroidissement liquide, un organe de guidage comportant un point de transfert pour guider et transférer le flux de refroidissement ainsi qu'un dispositif d'introduction pour introduire la masse dans le flux de refroidissement,
**caractérisé en ce qu'**
un réservoir (1) contient un bain d'agent de refroidissement (3) et le point de transfert (16) de l'organe de guidage (6) se trouve dans le bain d'agent de refroidissement (3) ou au-dessus de celui-ci, et
le réservoir (3) est réalisé sous la forme d'un bain de congélation par immersion et une installation de transport (11) est prévue pour transporter les boulettes (10) dans le bain d'agent de refroidissement (3) et pour extraire les boulettes (10) du bain de congélation par immersion, et le point de transfert (16) de l'organe de guidage (6) débouche au-dessus de l'installation de transfert (11) et l'organe de guidage (6) se trouve à l'intérieur du réservoir (1).

5. Dispositif selon la revendication 4,
**caractérisé en ce que**
l'organe de guidage (6) s'étend sur toute sa longueur au-dessus du bain d'agent de refroidissement (3).

6. Dispositif selon la revendication 4 ou 5,
**caractérisé en ce que**
l'organe de guidage (6) a une longueur de l'ordre de 30 cm à 60 cm.

7. Dispositif selon l'une des revendications 5 ou 6,
**caractérisé en ce que**
le dispositif d'introduction (8) est réalisé pour introduire une masse de jus de fruit (9) dans le flux de refroidissement (7).
